# EUROPEAN PATENT SPECIFICATION

(11) **EP 2 195 991 B1**
(45) Date of publication and mention of the grant of the patent: **30.01.2013**
(21) Application number: 08793727.2
(22) Date of filing: 05.09.2008
(51) Int. Cl.: H04L 27/26, H04J 11/00

(54) **Method and system for transmitting and receiving signals**
Verfahren und System zum Senden und Empfangen von Signalen
Procédé et système de transmission et de réception de signaux

(30) Priority: 06.09.2007 US 970523 P
(43) Date of publication of application: 16.06.2010
(60) Divisional application: 12197487.7
(73) Proprietor: LG Electronics Inc., Seoul 150-721 (KR)
(72) Inventor: KO, Woo Suk, Seoul 137-724 (KR); MOON, Sang Chul, Seoul 137-724 (KR)
(74) Representative: Cabinet Plasseraud
(86) International application number: PCT/KR2008/005272
(87) International publication number: WO 2009/031863

(56) References cited:
- EP-A2- 1 770 937
- WO-A1-03/094520
- JP-A- 2007 110 456
- US-A- 6 018 528
- US-A1- 2002 136 317
- US-A1- 2007 064 831
- ASMA LATIF ET AL: "BER Performance Evaluation and PSD Analysis of Non-Coherent Hybrid MQAM-LFSK OFDM Transmission System", EMERGING TECHNOLOGIES, 2006. ICET '06. INTERNATIONAL CONFERENCE O N, IEEE, PI, 1 January 2006 (2006-01-01), pages 53-59, XP031065407, ISBN: 978-1-4244-0502-2

## Description

### Technical Field

The present invention relates to a method of efficiently transmitting and receiving signals and efficient transmitter and receiver for an OFDM (Orthogonal Frequency Division Multiplexing) system including a TFS (Time-Frequency Slicing).

### Background Art

TFS (Time Frequency Slicing) technique has been introduced for broadcasting. When a TFS is used, a single service can be transmitted through multiple RF (Radio Frequency) channels on a two-dimensional time-frequency space.

OFDM (Orthogonal Frequency Division Multiplexing) is a frequency-division multiplexing (FDM) scheme utilized as a digital multi-carrier modulation method. A large number of closely-spaced orthogonal sub-carriers are used to carry data. The data are divided into several parallel data streams or channels, one for each sub-carrier. Each sub-carrier is modulated with a conventional modulation scheme (such as quadrature amplitude modulation or phase shift keying) at a low symbol rate, maintaining total data rates similar to conventional single-carrier modulation schemes in the same bandwidth.

OFDM has developed into a popular scheme for wideband digital communication, whether wireless or over copper wires, used in applications such as digital television and audio broadcasting, wireless networking and broadband internet access.

When TFS, which uses multiple RF bands for each transmitter is combined with OFDM, frequency diversity gain and statistical multiplexing gain can be obtained, thus, resources can be efficiency utilized.
D1 (ASMA LATIF ET AL: "BER Performance Evaluation and PSD Analysis of Non-Coherent Hybrid MQAM-LFSK OFDM Transmission System", EMERGING TECHNOLOGIES, 2006 ICET'06. INTERNATINAL CONFERENCE ON, IEEE, PI, 1 January 2006 (2006-01-01) ISBN: 978-1-4244-0502-2) discloses design and performance analysis of a hybrid modulation system derived from multi-frequency and MQAM signals, employed in OFDM.
EP 1770937 A2 relates to a method and system for a reconfigurable orthogonal frequency division multiplexing (OFDM) radio supporting diversity.

### Disclosure of Invention

### Technical Problem

It is, therefore, an object of the present invention to provide a method of efficiently transmitting and receiving signals and efficient transmitter and receiver for an OFDM system including TFS.

### Technical Solution

According to an aspect of the present invention, there is provided a method of transmitting signals for OFDM system as defined by claim 1.

According to another aspect of the present invention, there is provided a receiver for OFDM system as defined by claim 4.

According to yet another aspect of the present invention, there is provided a method of receiving signals for OFDM system as defined by claim 6.

It is to be understood that both the foregoing general description and the following detailed description of the present invention are exemplary and explanatory and are intended to provide further explanation of the invention as claimed.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

### Advantageous Effects

According to the present invention, it is possible to provide a method of efficiently transmitting and receiving signals and efficient transmitter and receiver for an OFDM system including TFS.

### Brief Description of the Drawings

The accompanying drawings, which are included to provide a further understanding of the invention and are incorporated in and constitute a part of this application, illustrate embodiment(s) of the invention and together with the description serve to explain the principle of the invention. In the drawings:

Fig. 1 is a block diagram of an example of a TFS (Time Frequency Slicing)-OFDM (Orthogonal Frequency Division Multiplexing) transmitter.

Fig. 2 is a block diagram of an example of the input processor shown in the Fig. 1.

Fig. 3 is a block diagram of an example of the BICM (Bit-Interleaved Coding and Modulation) shown in Fig. 1.

Fig. 4 is a block diagram of an example of the Frame Builder shown in Fig. 1.

Fig. 5 is a table of an example of a hybrid modulation ratio when an LDPC block length is 64800 bits.

Fig. 6 is a table of an example of a hybrid modulation ratio when an LDPC block length is 16200 bits.

Fig. 7 is a block diagram of an example of the QAM mapper shown in Fig. 1.

Fig. 8 is a block diagram of an example of the QAM mapper combined with an inner encoder and an inner interleaver.

Fig. 9 is an example of a bit interleaver.

Fig. 10 is a table of an example of the bit interleaver when an LDPC block length is 64800 bits.

Fig. 11 is is a table of an example of the bit interleaver when an LDPC block length is 16200 bits.

Fig. 12 is an example of the demux shown in Fig. 1.

Fig. 13 is another example of the demux shown in Fig. 1.

Fig. 14 is a relationship between an input bitstream of the bit interleaver and an output bitstream of the demux.

Fig. 15 is an example of a QAM symbol mapping.

Fig. 16 is a block diagram of an example of the MIMO/MISO decoder shown in Fig. 1.

Fig. 17 is a block diagram of an example of the modulator, specifically an example of an OFDM modulator.

Fig. 18 is a block diagram of an example of the analog processor shown in Fig. 1.

Fig. 19 is a block diagram of an example of a TFS-OFDM receiver.

Fig. 20 is a block diagram of an example of the AFE (Analog Front End) shown in Fig. 19.

Fig. 21 is a block diagram of an example of the demodulator, specifically an OFDM demodulator.

Fig. 22 is a block diagram of an example of the MIMO/MISO decoder shown in Fig. 19.

Fig. 23 is a block diagram of an example of the frame parser shown in Fig. 19.

Fig. 24 is a block diagram of an example of the QAM demapper shown in Fig. 23.

Fig. 25 is a block diagram of an example of the QAM demapper combined with an inner deinterleaver.

Fig. 26 is a block diagram of an example of the BICM decoder shown in Fig. 19.

Fig. 27 is a block diagram of an example of the output processor shown in Fig. 19.

### Best Mode for Carrying Out the Invention

Reference will now be made in detail to the preferred embodiments of the present invention, examples of which are illustrated in the accompanying drawings. Wherever possible, the same reference numbers will be used throughout the drawings to refer to the same or like parts.

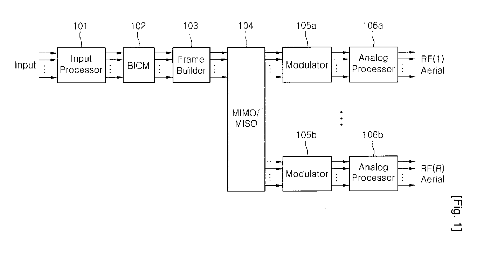

Fig. 1 shows an example of proposed TFS (Time Frequency Slicing)-OFDM (Orthogonal Frequency Division Multiplexing) transmitter. A multiple MPEG2-TS (Transport Stream) and a multiple Generic stream can be inputted into a TFS transmitter. The input processor (101) can split the inputted streams into a multiple output signals for a multiple PLP (Physical Layer Path). The BICM (Bit-Interleaved Coding and Modulation) (102) can encode and interleave the PLP individually. The frame builder (103) can transform the PLP into total R of RF bands. MIMO (Multiple-Input Multiple-Output)/MISO (Multiple-Input Single-Output) (104) technique can be applied for each RF band. Each RF band for each antenna can be individually modulated by the modulator (105a, b) and can be transmitted to antennas after being converted to an analog signal by the analog processor (106a, b).

### Mode for the Invention

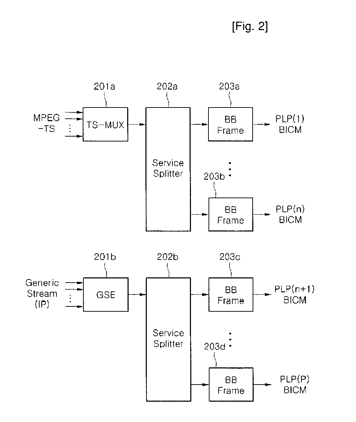

Fig. 2 is an example of the input processor. MPEG-TS (Transport Stream) can be multiplexed into a single output through TS-MUX (201a) and Generic streams (Internet protocol) can be transformed into a single output through GSE (General Stream Encapsulation) (201b). Each output from the TS-MUX and GSE can be split for multiple services by the service splitter (202a, b). PLP is a processing of each service. Each PLP can be transformed into a frame by the BB (Baseband) Frame (103a∼d).

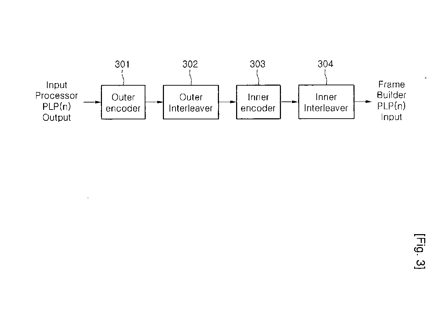

Fig. 3 is an example of the BICM. The Outer encoder (301) and the inner encoder (303) can add redundancy for error correction in a transmission channel. The outer interleaver (302) and the inner interleaver (304) can interleave data randomly to mitigate burst errors.

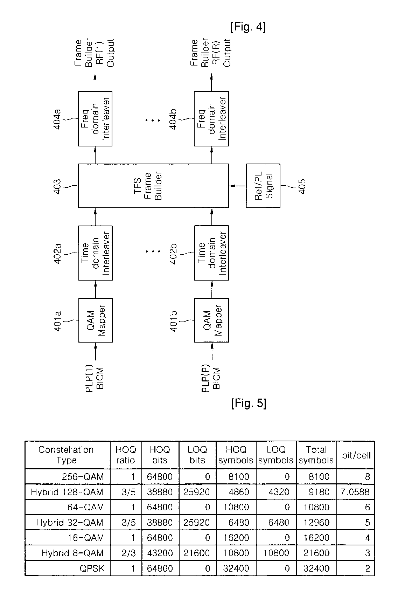

Fig. 4 is an example of the frame builder. QAM mapper (401a, b) can transform inputted bits into QAM symbols. Hybrid QAM can be used. Time domain interleaver (402a, b) can interleave data in time domain to make the data be robust against burst error. At this point, an effect of interleaving many RF bands can be obtained in a physical channel because the data are going to be transmitted to a multiple RF bands. TFS frame builder (403) can split inputted data to form TFS frames and send the TFS frames to total R of RF bands according to a TFS scheduling. Each RF band can be individually interleaved in frequency domain by frequency domain interleaver (404a, b) and can become robust against frequency selective fading. Ref (Reference Signals), PL (Physical Layer) signaling, and pilots can be inserted when the TFS frame is built (405).

By hybriding two Even-QAMs, which transmits even number of bits per QAM symbol, an Odd-QAM, which transmits odd number of bits per QAM symbol can be formed by a Hybrid QAM mapper. For example, hybrid 128-QAM can be obtained by hybriding 256-QAM and 64-QAM, hybrid 32-QAM can be obtained by hybriding 64-QAM and 16-QAM, and hybrid 8-QAM can be obtained by hybriding 16-QAM and 4-QAM.

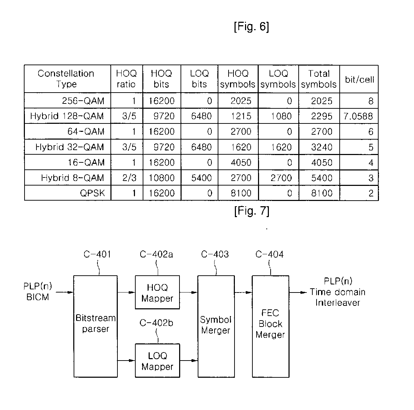

Fig. 5 and Fig. 6 show examples of a hybrid ratio when DVB-S2 LDPC (Low Density Parity Check) code is used as an inner code. The first column on the table represents constellation type. HOQ (Higher-Order QAM) ratio represents a ratio for higher-order QAM between two QAM types. LOQ (Lower-Order QAM) ratio is 1-HOQ ratio. Hybrid QAM can be obtained by two adjacent Even-QAMs. For example, hybrid 128-QAM (bit/cell=7) is obtained by hybriding 256-QAM and 64-QAM. HOQ bits and LOQ bits represent number of bits used for mapping into HOQ symbol and LOQ symbol respectively in one LDPC block. HOQ symbols and LOQ symbols represent number of symbols after symbol mapping. Total symbol is a sum of the HOQ symbols and the LOQ symbols. The last column on the table represents effective number of bits transmitted per QAM symbol. As seen on the table, only Hybrid 128-QAM shows a slight difference from 7 bit/cell.

Fig. 6 shows a case when LDPC block length is 16200 bits. When a scheduling is performed to evenly distribute QAM symbols, which are generated by the Frame Builder, to RF bands of TFS system, the value of the total symbols should be divisible by a least common multiple of each index number of RF band. For example, if six RF bands are allowed, then the value of total symbols on the table should be divisible by a least common multiple of I through 6, i.e., 60. For the case shown in Fig. 5, it is divisible. However, for the case shown in Fig. 6, it is not divisible. If LDPC block length is 16200 bits as shown in Fig. 6, the total symbols on the table can be made divisible by 60 by combining four of the LDPC blocks into a single LDPC block having a length of 64800 as in Fig. 5.

Fig. 7 shows an example of QAM mapper using hybrid modulation. Bit stream parser(c-401) can parse inputted bitstreams into HOQ mapper(c-402a) and LOQ mapper(c-402b). The symbol merger(c-403) can merge the two inputted symbol streams into a single symbol stream. FEC (forward Error Correction) block merger (c-404), for example, can combine four of bit symbol blocks having a length of 16200 into a single block having a length of 64800.

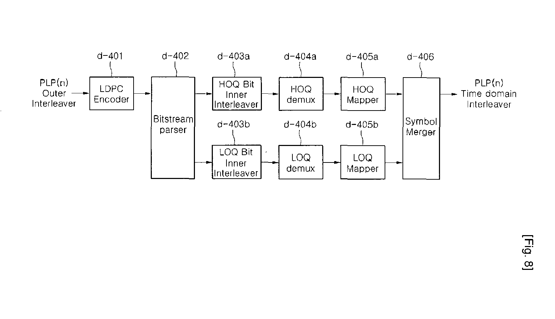

Fig. 8 shows an example of QAM mapper combined with inner interleavers. Bitstreams can be divided by bitstream parser (d-402) into bitstreams for HOQ and LOQ mappers. Each bitstream goes through bit interleaving (d-403a, d-403b) and demux (d-404a, d-404b)) processes. Throughout these processes, characteristics of LDPC codeword and constellation reliability can be combined. Each output can be converted into symbolstreams by the HOQ and LOQ mappers (d-405a, d-405b), then merged into a single symbolstream by the symbol merger (d-406).

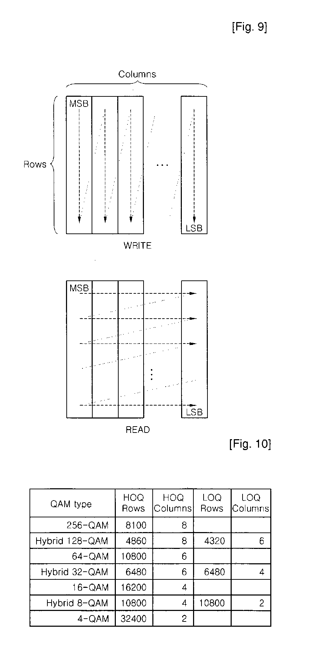

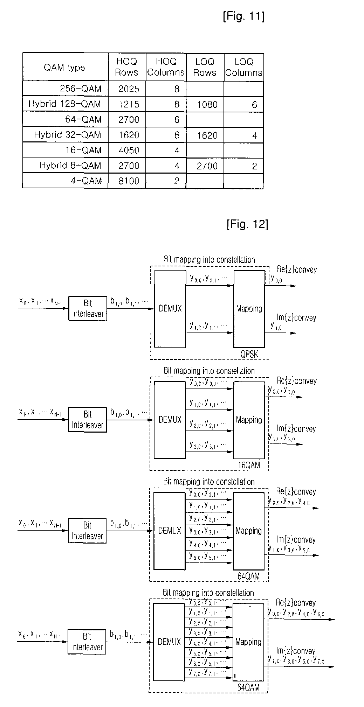

Fig. 9 shows an example of bit interleaving. Bits can be saved into a matrix type memory having columns and rows in the direction of column or in the direction of the blue arrow. Then the saved bits can be read out in the direction of row or in the direction of the red arrow. Figs. 10 and 11 show numbers of columns and rows of HOQ bit interleaver (d-403a) and LOQ bit interleaver (d-403b) according to QAM modulation type. As seen in the tables, when a typical even-QAM is used but a hybrid modulation is not used, only HOQ interleaving is used.

Fig. 12 shows an example of the demux. It shows that interleaved outputs according to QPSK, 16-QAM, 64-QAM, and 256-QAM can be demultiplexed and mapped. It also shows that the numbers of output bitstreams from demuxs are 2, 4, 6, and 8 respectively.

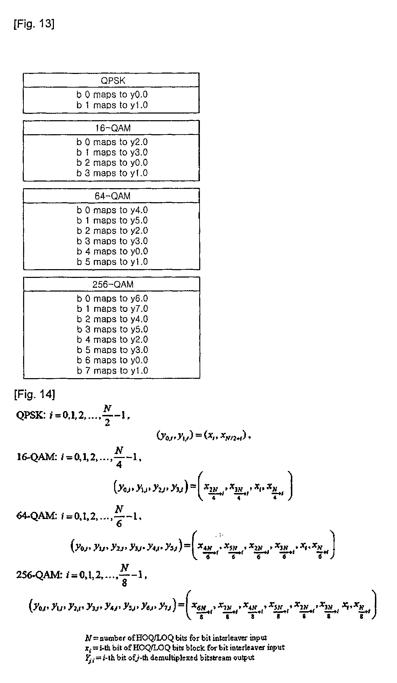

Detail of the demux operation is shown in Fig. 13. As seen in the figure, output order of interleaver can be changed by demux. For example, for the case of 16-QAM, bitstreams can be outputted as j-th output bitstream of each demux according to a value resulting from performing an modulo-4 operation on index of input bitstream b. Fig. 13 shows a relationship between a value resulting from a modulo operation and demux output branch index j.

Fig. 14 shows a relationship between an input bitstream of bit interleaver and an output bitstream of demux. As seen in the equations, dividing index of input bitstream by 2, 4, 6, and 8 is a result by the interleaving and mapping each index to index of output bitstream is a result by the demux.

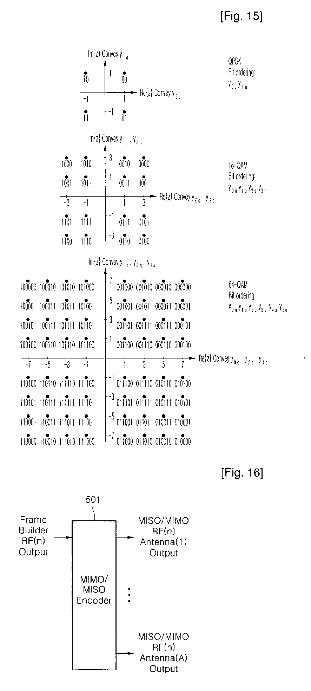

Fig. 15 shows an example of QAM symbol mapping. Output bitstream of demux can be converted into symbolstream by using Gray mapping rule. Even if it is not shown, it can be extended to constellation of 256-QAM or more.

Fig. 16 shows an example of MIMO/MISO Encoder. MIMO/MISO Encoder (501) applies MIMO/MISO method to obtain an additional diversity gain or payload gain. MIMO/MISO Encoder can output signals for total A of antennas. MIMO encoding can be performed individually on total A of antenna signals for each RF band among total R of RF bands. A is equal to or greater than 1.

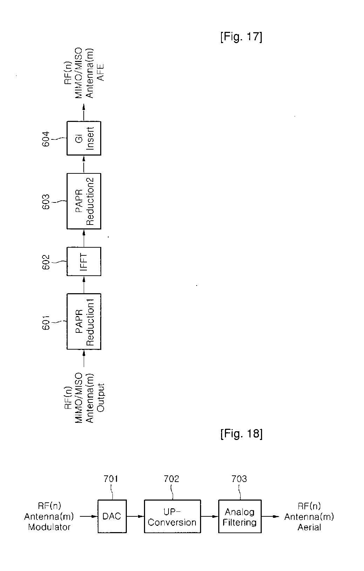

Fig. 17 shows an example of a modulator, specifically an example of an OFDM modulator. PAPR (Peak-to-Average Power Ratio) reduction 1 (601) can be performed on Antenna (m) signals of RF (n) bands. IFFT (602) can be performed for OFDM demodulation. PAPR reduction 2 (603) can be performed after the IFFT. ACE (Active Constellation Extension) and a tone reservation can be used for the PAPR reduction 2 (603). Lastly, guard interval (604) can be inserted.

Fig. 18 shows an example of the analog processor. Output of each modulator can be converted to an analog-domain signal by a DAC (Digital to Analog Conversion) (701), then can be transmitted to antenna after up-conversion (702). Analog filtering (703) can be performed.

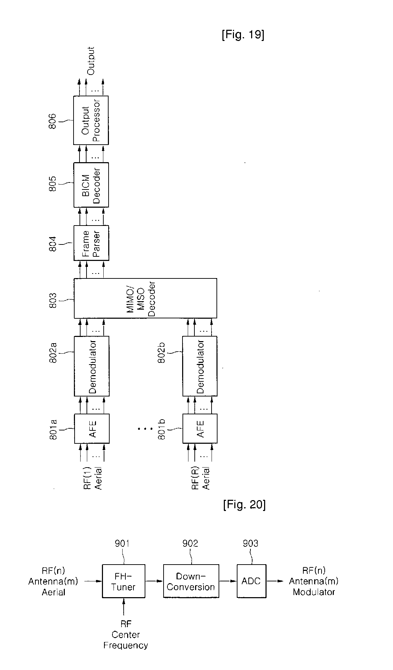

Fig. 19 shows an example of a TFS-OFDM receiver. When total R of RF bands are used for TFS system, received signals by AFE (Analog Front End) (801a,b) can be demodulated by demodulators (802a,b), then can be decoded by MIMO/MISO Decoder (803) to obtain diversity gain. Frame parser (804) can restore multiple PLP signals from received TFS frame. BICM decoder (805) can correct errors in a transmission channel. Finally, output processor (806) can restore signals according to necessary format.

Fig. 20 shows an example of an AFE (Analog Front End). FH (Frequency Hopping)-tuner (901) can perform a frequency hopping and tune signals according to inputted RF center frequency. After down-conversion (902), signals can be converted to digital signals by ADC (Analog to Digital Conversion) (903).

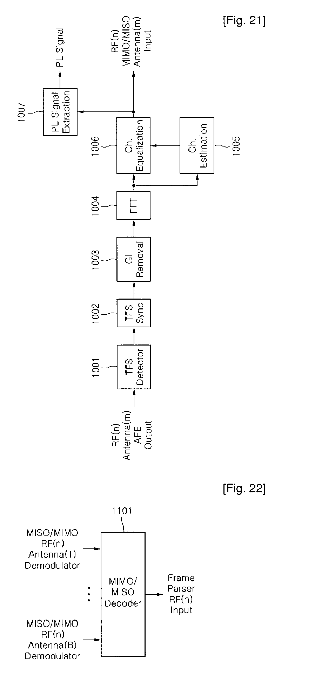

Fig. 21 shows an example of a demodulator, specifically an OFDM demodulator. TFS detector (1001) can detect TFS signals in a received digital signal. TFS sync (1002) can synchronize in time and frequency domains. After GI (Guard Interval) (1003) is removed, symbols in frequency domain can be obtained by performing FFT (1004) for OFDM demodulation. Channel Estimation (1005) can estimate distortion in a transmission channel based on pilot signals. Based on the estimated distortion, Channel Equalization (1006) can compensate distortion in the transmission channel. Finally, PL (Physical Layer) signaling information can be extracted from equalized data and can be transmitted to a system controller.

Fig. 22 shows an example of MIMIO/MISO decoder. Diversity and multiplexing gain can be obtained from data received from total B of antennas. For MIMO, B is greater than 1. For MISO, B is 1.

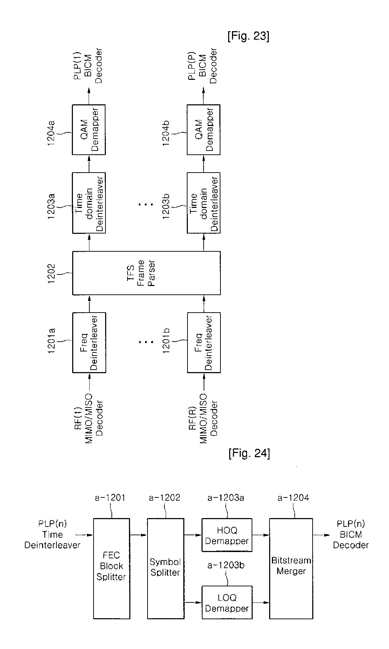

Fig. 23 shows an example of a Frame parser. Total R of the inputted RF bands data can undergo frequency deinterleaving (1201a, b), then can be reconstructed into datastream by TFS frame parser for each PLP (Physical Layer Path) according to a TFS scheduling. For each PLP, input data for BICM decoder can be obtained by using time domain deinterleaver (1203a, b) and QAM demapper (1204a, b). At this point, hybrid QAM demapper can be used as the QAM demapper.

Fig. 24 shows an example of performing a QAM demapper, which is a counterpart of Fig. 7 of transmitter. FEC block splitter can split inputted symbol block unit having 64800 bits into four symbol blocks of 16200 bits when short DVB-S2 LDPC mode is used. Symbol splitter (a-1202) can split inputted symbol streams into two symbol streams for HOQ and LOQ demapper. HOQ demapper (a-1203a) and LOQ demapper (a-1203b) can perform HOQ and LOQ demapping respectively. Bitstream merger (a-1204) can merge two inputted bit streams into a single output bitstream.

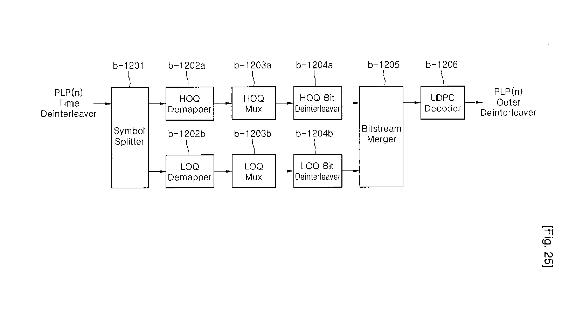

Fig. 25 shows an example of a QAM demapper combined with inner deinterleavers which are counterparts of Fig. 8 of transmitter. For each PLP, symbol splitter (b-1201) can split output of time domain deinterleaver into two symbol streams for HOQ and LOQ demappers. HOQ and LOQ Demapper (b-1202a, b-1202b) can convert symbolstreams into bitstreams. Each bitstream can be rearranged by multiplexer (b-1203a, b-1203b), which is a counterpart of the demux of Fig. 8 of transmitter. Two bit deinterleavers (b-1204a, b-1206) can deinterleave bitstreams according to constellation type. Finally, bitstream merger (b-1205) can merge bitstreams into a single bitstream, then LDPC decoder (b-1206) can correct errors in a transmission channel.

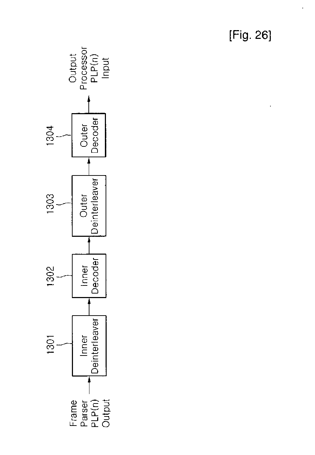

Fig. 26 shows an example of a BICM decoder. Inner deinterleaver (1301) and outer deinterleaver (1303) can convert burst errors in a transmission channel into random errors. Inner decoder (1302) and outer decoder (1304) can correct errors in the transmission channel.

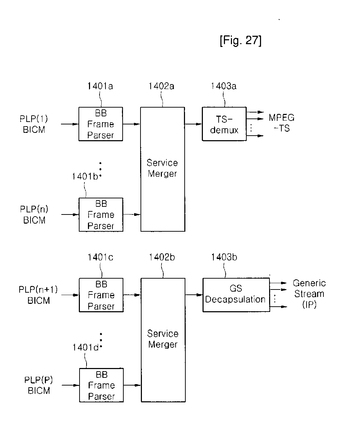

Fig. 27 shows an example of an output processor. BB (Baseband) frame parser (1401a∼d) can reconstruct input data into total P of PLP data. Service mergers (1402a, b) can merge data into a single TS (Transport Stream) and a single GSE stream. For TS, TS-demux (1403a) can reconstruct original TS. For GSE stream, GSE Decapsulation (1403b) can reconstruct generic stream.

It will be apparent to those skilled in the art that various modifications and variations can be made in the present invention. Thus, it is intended that the present invention covers the modifications and variations of this invention provided they come within the scope of the appended claims.

## Claims

1. A method of transmitting broadcast signals for an Orthogonal Frequency Division Multiplexing, OFDM, system, the method comprising:
encoding(d-401) a single physical layer path, PLP, by a forward error correction scheme;
dividing (d-402) the single PLP into two bitstreams;
demultiplexing (d-404a) a first bitstream of the two bitstreams to change an order of bits in the first demultiplexed bitstream according to a High Order Quadrature Amplitude Modulation, HOQ, mapping method;
demultiplexing (d-404b) a second bitstream of the two bitstreams to change an order of bits in the second demultiplexed bitstream according to a Low Order Quadrature Amplitude Modulation, LOQ, mapping method;
mapping the changed bits in the first and second demultiplexed bitstreams to respective symbols using the HOQ mapping method (d-405a) and the LOQ mapping method(d-405b); and
encoding the symbols using a MIMO or MISO scheme.

2. The method of claim 1, further comprising:
interleaving (d-403a) bits in the first bitstream; and
interleaving (d-403b) its in the second bitstream.

3. The method of claim 1, further comprising:
merging the HOQ symbols and the LOQ symbols into a symbol stream,
wherein the merged symbols are encoded using the MISO scheme.

4. A receiver for an Orthogonal Frequency Division Multiplexing, OFDM, system, the receiver comprising:
a demodulator (802a) configured to demodulate broadcast signals into OFDM symbols;
a first decoder (803) configured to decode the demodulated broadcast signals using a MIMO or MISO scheme;
a symbol splitter (b-1201) configured to divide the decoded broadcast signals into two symbol streams;
a High Order Quadrature Amplitude Modulation, HOQ, symbol demapper (d-1202a) configured to demap a first symbol stream of the two symbol streams into a first bitstream;
a Low Order Quadrature Amplitued Modulation, LOQ, symbol demapper (b-1202b) configured to demap a second symbol stream of the two symbol streams into a second bitstream;
a multiplexer (b-1203a) configured to change an order of bits in the first bitstream according to the HOQ demapping method;
a multiplexer (b-1203b) configured to change an order of bits in the second bitstream according to the LOQ demapping method;
a merger (b-1205) configured to merge the first and second multiplexed bitstreams to a single PLP; and
a decoder (b-1206) configured to decode a single PLP by a forward error correction scheme.

5. The receiver of claim 4, further comprising:
an HOQ Bit Deinterleaver (b- 1204a) configured to deinterleave the first multiplexed bitstream of the multiplexed bitstreams; and
an LOQ Bit Deinterleaver (b- 1204b) configured to deinterleave the second multiplexed bitstream of the multiplexed bitstreams.

6. A method of receiving broadcast signals for an Orthogonal Frequency Division Multiplexing, OFDM, system, the method comprising:
demodulating the broadcast signals into OFDM symbols;
decoding the demodulated broadcast signals using a MIMO or MISO scheme;
dividing the decoded broadcast signals into two symbol streams;
High Order Quadrature Amplitude Modulation, HOQ, symbol demapping a first symbol stream of the two symbol streams into a first bitstream;
Low Order Quadrature Amplitude Modulation, LOQ, symbol demapping a second symbol stream of the two symbol streams into a second bitstream;
changing an order of bits in the first bitstream according to the HOQ demapping method;
changing an order of bits in the second bitstream according to the LOQ demapping method;
merging the first and second multiplexed bitstreams to a single PLP; and
decoding the single PLP by a forward error correction scheme.

7. The method of claim 6, further comprising:
deinterleaving bits in the first bitstream; and
deinterleaving bits in the second bitstream.

## Patentansprüche

1. Verfahren zum Senden von Rundfunksignalen für ein orthogonales Frequenzmultiplex-System ("Orthogonal Frequency Division Multiplexing, OFDM, system"), wobei das Verfahren folgende Schritte aufweist:
Codieren (d-401) eines einzigen Physikalische-Schicht-Wegs ("Single Physical Layer Path, PLP") durch ein Vorwärtsfehlerkorrektur-Schema,
Zerlegen (d-402) des einzigen PLP in zwei Bitstreams,
Demultiplexieren (d-404a) eines ersten Bitstreams von den beiden Bitstreams, um die Bitreihenfolge in dem ersten demultiplexierten Bitstream nach einem Quadraturamplitudenmodulations-Abbildungsverfahren hoher Ordnung ("High Order Quadrature Amplitude Modulation, HOQ, mapping method") zu ändern,
Demultiplexieren (d-404b) eines zweiten Bitstreams von den beiden Bitstreams, um die Bitreihenfolge in dem zweiten demultiplexierten Bitstream nach einem Quadraturamplitudenmodulations-Abbildungsverfahren niedriger Ordnung ("Low Order Quadrature Amplitude Modulation, LOQ, mapping method") zu ändern,
Abbilden der geänderten Bits in dem ersten und dem zweiten demultiplexierten Bitstream auf jeweilige Symbole unter Verwendung des HOQ-Abbildungsverfahrens (d-405a) und des LOQ-Abbildungsverfahrens (d-405b) und
Codieren der Symbole unter Verwendung eines MIMO- oder MISO-Schemas.

2. Verfahren nach Anspruch 1, welches ferner aufweist:
Interleaven (d-403a) von Bits in dem ersten Bitstream und
Interleaven (d-403b) von Bits in dem zweiten Bitstream.

3. Verfahren nach Anspruch 1, welches ferner aufweist:
Zusammenführen der HOQ-Symbole und der LOQ-Symbole zu einem Symbol-Stream,
wobei die zusammengeführten Symbole unter Verwendung des MISO-Schemas codiert werden.

4. Empfänger für ein orthogonales Frequenzmultiplex-System ("Orthogonal Frequency Division Multiplexing, OFDM, system"), wobei der Empfänger aufweist:
einen Demodulator (802a), der konfiguriert ist, um Rundfunksignale zu OFDM-Symbolen zu demodulieren,
einen ersten Decodierer (803), der konfiguriert ist, um die demodulierten Rundfunksignale unter Verwendung eines MIMO- oder MISO-Schemas zu decodieren,
einen Symbolteiler (b-1201), der konfiguriert ist, um die decodierten Rundfunksignale in zwei Symbol-Streams zu zerlegen,
einen Quadraturamplitudenmodulations-Symbol-Demapper hoher Ordnung ("High Order Quadrature Amplitude Modulation, HOQ, symbol demapper") (d-1202a), der konfiguriert ist, um einen ersten Symbol-Stream der beiden Symbol-Streams auf einen ersten Bitstream rückabzubilden,
einen Quadraturamplitudenmodulations-Symbol-Demapper niedriger Ordnung ("Low Order Quadrature Amplitude Modulation, LOQ, symbol demapper") (b-1202b), der konfiguriert ist, um einen zweiten Symbol-Stream der beiden Symbol-Streams auf einen zweiten Bitstream rückabzubilden,
einen Multiplexer (b-1203a), der konfiguriert ist, um die Bitreihenfolge in dem ersten Bitstream nach dem HOQ-Rückabbildungsverfahren zu ändern,
einen Multiplexer (b-1203b), der konfiguriert ist, um die Bitreihenfolge in dem zweiten Bitstream nach dem LOQ-Rückabbildungsverfahren zu ändern,
einen Zusammenführer (b-1205), der konfiguriert ist, um den ersten und den zweiten multiplexierten Bitstream zu einem einzigen PLP zusammenzuführen, und
einen Decodierer (b-1206), der konfiguriert ist, um einen einzigen PLP durch ein Vorwärtsfehlerkorrektur-Schema zu decodieren.

5. Empfänger nach Anspruch 4, welcher ferner aufweist:
einen HOQ-Bit-Deinterleaver (b-1204a), der konfiguriert ist, um den ersten multiplexierten Bitstream von den multiplexierten Bitstreams zu deinterleaven, und
einen LOQ-Bit-Deinterleaver (b-1204b), der konfiguriert ist, um den zweiten multiplexierten Bitstream von den multiplexierten Bitstreams zu deinterleaven.

6. Verfahren zum Empfangen von Rundfunksignalen für ein orthogonales Frequenzmultiplex-System ("Orthogonal Frequency Division Multiplexing, OFDM, system"), wobei das Verfahren folgende Schritte aufweist:
Demodulieren der Rundfunksignale in OFDM-Symbole,
Decodieren der demodulierten Rundfunksignale unter Verwendung eines MIMO- oder MISO-Schemas,
Zerlegen der decodierten Rundfunksignale in zwei Symbol-Streams,
Quadraturamplitudenmodulations-Symbol-Rückabbilden hoher Ordnung ("High Order Quadrature Amplitude Modulation, HOQ, symbol demapping") eines ersten Symbol-Streams von den beiden Symbol-Streams in einen ersten Bitstream,
Quadraturamplitudenmodulations-Symbol-Rückabbilden niedriger Ordnung ("Low Order Quadrature Amplitude Modulation, LOQ, symbol demapping") eines zweiten Symbol-Streams von den beiden Symbol-Streams in einen zweiten Bitstream,
Ändern der Bitreihenfolge in dem ersten Bitstream nach dem HOQ-Rückabbildungsverfahren,
Ändern der Bitreihenfolge in dem zweiten Bitstream nach dem LOQ-Rückabbildungsverfahren,
Zusammenführen des ersten und des zweiten multiplexierten Bitstreams zu einem einzigen PLP und
Decodieren des einzigen PLP durch ein Vorwärtsfehlerkorrektur-Schema.

7. Verfahren nach Anspruch 6, welches ferner aufweist:
Deinterleaven von Bits in dem ersten Bitstream und
Deinterleaven von Bits in dem zweiten Bitstream.

## Revendications

1. Procédé d'émission de signaux de diffusion pour un système à multiplexage par répartition orthogonale de fréquences (OFDM, « Orthogonal Frequency Division Multiplexing »), le procédé comprenant :
coder (d-401) un conduit de couche physique, (PLP, « Physical Layer Pipe ») unique par un schéma de correction d'erreurs de transmission ;
diviser (d-402) le PLP unique en deux flux de bits ;
démultiplexer (d-404a) un premier flux de bits parmi les deux flux de bits afin de changer un ordre de bits dans le premier flux de bits démultiplexé selon un procédé de mappage par modulation d'amplitude en quadrature d'ordre élevé (HOQ, « High Order Quadrature Amplitude Modulation ») ;
démultiplexer (d-404b) un deuxième flux de bits parmi les deux flux de bits afin de changer un ordre de bits dans le deuxième flux de bits démultiplexé selon un procédé de mappage par modulation d'amplitude en quadrature d'ordre faible (LOQ, « Low Order Quadrature Amplitude Modulation ») ;
mapper les bits changés dans les premier et deuxième flux de bits démultiplexés sur des symboles respectifs en utilisant le procédé de mappage HOQ (d-405a) et le procédé de mappage LOQ (d-405b) ; et
coder les symboles en utilisant un schéma MIMO ou MISO.

2. Procédé selon la revendication 1, comprenant en outre :
entrelacer (d-403a) des bits dans le premier flux de bits ; et
entrelacer (d-403b) des bits dans le deuxième flux de bits.

3. Procédé selon la revendication 1, comprenant en outre :
fusionner les symboles HOQ et les symboles LOQ en un flux de symboles,
dans lequel les symboles fusionnés sont codés en utilisant le système MISO.

4. Récepteur pour un système à multiplexage par répartition orthogonale de fréquences (OFDM, « Orthogonal Frequency Division Multiplexing »), le récepteur comprenant :
un démodulateur (802a) configuré pour démoduler des signaux de diffusion en des symboles OFDM ;
un premier décodeur (803) configuré pour décoder les signaux de diffusion démodulés en utilisant un schéma MIMO ou MISO ;
un répartiteur de symboles (b-1201) configuré pour diviser les signaux de diffusion décodés en deux flux de symboles ;
un dispositif (d-1202a) de démappage de symboles à modulation d'amplitude en quadrature d'ordre élevé (HOQ, «High Order Quadrature Amplitude Modulation ») configuré pour effectuer un démappage d'un premier flux de symboles parmi les deux flux de symboles en un premier flux de bits ;
un dispositif (b-1202b) de démappage de symboles à modulation d'amplitude en quadrature d'ordre faible (LOQ, « Low Order Quadrature Amplitude Modulation ») configuré pour effectuer un démappage d'un deuxième flux de symboles parmi les deux flux de symboles en un deuxième flux de bits ;
un multiplexeur (b-1203a) configuré pour changer un ordre de bits dans le premier flux de bits selon le procédé de démappage HOQ ;
un multiplexeur (b-1203b) configuré pour changer un ordre de bits dans le deuxième flux de bits selon le procédé de démappage LOQ ;
un dispositif de fusion (b-1205) configuré pour fusionner les premier et deuxième flux de bits multiplexés en un PLP unique ; et
un décodeur (b-1206) configuré pour décoder un PLP unique par un schéma de correction d'erreurs de transmission.

5. Récepteur selon la revendication claim 4, comprenant en outre :
un dispositif de désentrelacemment de bits HOQ (b-1204a) configuré pour désentrelacer le premier flux de bits multiplexé parmi les flux de bits multiplexés ; et
un dispositif de désentrelacement de bits LOQ (b-1204b) configuré pour désentrelacer le deuxième flux de bits multiplexé parmi les flux de bits multiplexés.

6. Procédé de réception de signaux de diffusion pour système à multiplexage par répartition orthogonale de fréquences (OFDM, « Orthogonal Frequency Division Multiplexing »), le procédé comprenant :
démoduler les signaux de diffusion en des symboles OFDM ;
décoder les signaux de diffusion démodulés en utilisant un schéma MIMO ou MISO;
répartir les signaux de diffusion décodés en deux flux de symboles ;
appliquer un démappage de symboles à modulation d'amplitude en quadrature d'ordre élevé (HOQ, « High Order Quadrature Amplitude Modulation ») à un premier flux de symboles parmi les deux flux de symboles pour produire un premier flux de bits ;
appliquer un démappage de symboles à modulation d'amplitude en quadrature d'ordre faible (LOQ, « Low Order Quadrature Amplitude Modulation ») à un second flux de symboles parmi les deux flux de symboles pour produire un second flux de bits ;
changer un ordre de bits dans le premier flux de bits selon le procédé de démappage HOQ ;
changer un ordre de bits dans le second flux de bits selon le procédé de démappage LOQ ;
fusionner les premier et deuxième flux de bits multiplexés en un PLP unique ; et
décoder le PLP unique par un schéma de correction d'erreur de transmission.

7. Procédé selon la revendication 6, comprenant en outre :
désentrelacer les bits dans le premier flux de bits ; et
désentrelacer les bits dans le deuxième flux de bits.
